# DEMANDE DE BREVET EUROPEEN

(11) **EP 0 884 501 A1**
(43) Date de publication de la demande: **16.12.1998**
(21) Numéro de dépôt: 98420093.1
(22) Date de dépôt: 09.06.1998
(51) Int. Cl.: F16F 9/54

(54) **Tête d'amortisseur et son procédé de fabrication**

(30) Priorité: 13.06.1997 FR 9707606
(71) Demandeur: Financy, 63650 La Monnerie le Montel (FR)
(72) Inventeur: Bonnefoy, Gérard, 43210 Bas en Basset (FR)
(74) Mandataire: Perrier, Jean-Pierre

(57) **Abrégé**

Selon l'invention, l'anneau (4b) et le corps tubulaire (3b) sont monolithiques et les ailes cintrées formant l'anneau (4b) sont reliées par une soudure (13), droite et parallèle à une génératrice de l'anneau, et diamétralement opposée au corps (3b).

Son procédé de fabrication consiste à découper un flan dans une tôle métallique, à réaliser, par emboutissage, et dans la partie centrale du flan, un puits cylindrique correspondant au corps axial tubulaire (3b), à conformer à la presse les deux ailes du flan jouxtant le puits, afin qu'elles soient semi circulaires et délimitent un anneau fendu, et à réaliser une soudure longitudinale liant les bords de la fente délimitée entre les deux ailes semi circulaires de l'anneau.

## Description

L'invention est relative aux têtes de fixation d'amortisseurs pour véhicules, c'est à dire aux moyens reliant chacun des amortisseurs de suspension soit à la caisse, soit au châssis.

Elle concerne les têtes de fixation composées d'un anneau de fixation 4 et d'un corps axial 3 muni d'un filetage interne pour la liaison avec l'un des éléments de l'amortisseur. Quand ce corps est solidaire d'une embase 2, la liaison entre le corps tubulaire 3 et cette embase 2 est assurée par emmanchement serré ou par une soudure. Actuellement, la liaison entre l'anneau 4 et le corps 3 est assurée par une soudure. Cette soudure, qui relie deux corps cylindriques d'axes perpendiculaires et qui est réalisée entre la face en bout droite du corps tubulaire et la partie circulaire de l'anneau, est complexe et nécessite un contrôle de chaque pièce.

Il résulte de cette fabrication que le coût de l'ensemble est élevé puisqu'il faut gérer, fabriquer et assembler au moins deux, et parfois trois pièces. Par ailleurs, la liaison entre le corps axial et l'anneau est fragile en raison de la conception, quelles que soient les précautions prises au moment de la soudure.

Dans la demande de brevet allemand 1 016 067, l'anneau n'est pas totalement fermé et se prolonge vers l'amortisseur par deux demi cylindres qui délimitent le corps axial tubulaire et qui sont liés à une embase par sertissage de leur extrémité sur cette embase, et à la tige de l'amortisseur, par une clavette transversale. Cette construction simplifie la fabrication mais procure une liaison tête-amortisseur qui est moins résistante qu'une liaison combinant soudure et filetage.

La tête décrite dans la demande de brevet allemand 2 324 209 est également composée d'un anneau fendu prolongé vers l'amortissuer par deux demi-cylindres dont la liaison avec le corps d'amortisseur est assurée par sertissage, comme celle avec la tige de cet amortisseur. Là aussi, la fabrication est simplifiée mais au détriment de la résistance des liaisons avec, respectivement, le corps et la tige d'amortisseur.

La présente invention a pour objet de remédier à ces inconvénients en fournissant une tête de fixation pour amortisseur qui soit moins onéreuse et plus facile à réaliser, tout en offrant une meilleure résistance.

A cet effet, dans la tête de fixation selon l'invention, le corps tubulaire axial est constitué par un puits cylindrique monolithique prolongé par deux ailes cintrées délimintant un anneau fendu et dont les bords de la fente, droits et parallèles à une génératrice de l'anneau, sont reliés par une soudure droite.

L'invention concerne également le procédé de fabrication de cette tête consistant :
- à découper dans une tôle métallique un flan permettant de réaliser cette tête,
- à réaliser, par emboutissage, et dans la partie centrale du flan, un puits cylindrique correspondant au corps axial tubulaire,
- à conformer à la presse les deux ailes du flan jouxtant le puits, afin qu'elles soient semi cylindriques et délimitent un anneau fendu par une fente parallèle à une génératrice,
- et à réaliser une soudure longitudinale liant les bords de la fente délimitée entre les deux ailes semi cylindriques de l'anneau.

Les différentes phases de formation de l'anneau et du corps s'effectuent à la presse avec un outillage à suivre et ne nécessitent donc aucune intervention humaine. La soudure assurant la liaison des bords rectilignes des deux ailes délimitant l'anneau est beaucoup plus simple à réaliser qu'une soudure circulaire et peut être effectuée de manière automatique. Cette soudure s'effectue sur une partie beaucoup plus large et dans des conditions d'homogénéité bien supérieures à celles de la soudure traditionnelle entre l'anneau et le corps, ce qui permet d'obtenir une résistance mécanique bien supérieure. Enfin, le caractère monolithique de l'anneau et du corps améliore également la résistance de la tête de fixation, dans sa partie la plus sollicitée.

Dans une forme de mise en oeuvre préférée, le procédé consiste, après formation du puits dans le flan de départ, et sur la même presse, à réaliser un filetage dans ce puits.

Grâce à cela, la totalité des opérations de formation de l'élément monolithique peuvent être réalisées sur la même presse, sans aucune reprise ni intervention humaine, ce qui contribue à abaisser le coût de fabrication.

L'invention sera mieux comprise à l'aide de la description qui suit en référence au dessin schématique annexé.
Figure 1 est une vue de côté, en coupe partielle, montrant une tête d'amortisseur actuelle,
Figure 2 est une vue de côté, avec coupe partielle, montrant une tête d'amortisseur selon l'invention,
Figures 3 à 6 sont des vues de côté en coupe montrant différentes phases de la fabrication de l'élément monolithique comprenant l'anneau et le corps axial,
Figure 7 est une vue en coupe de l'embase.

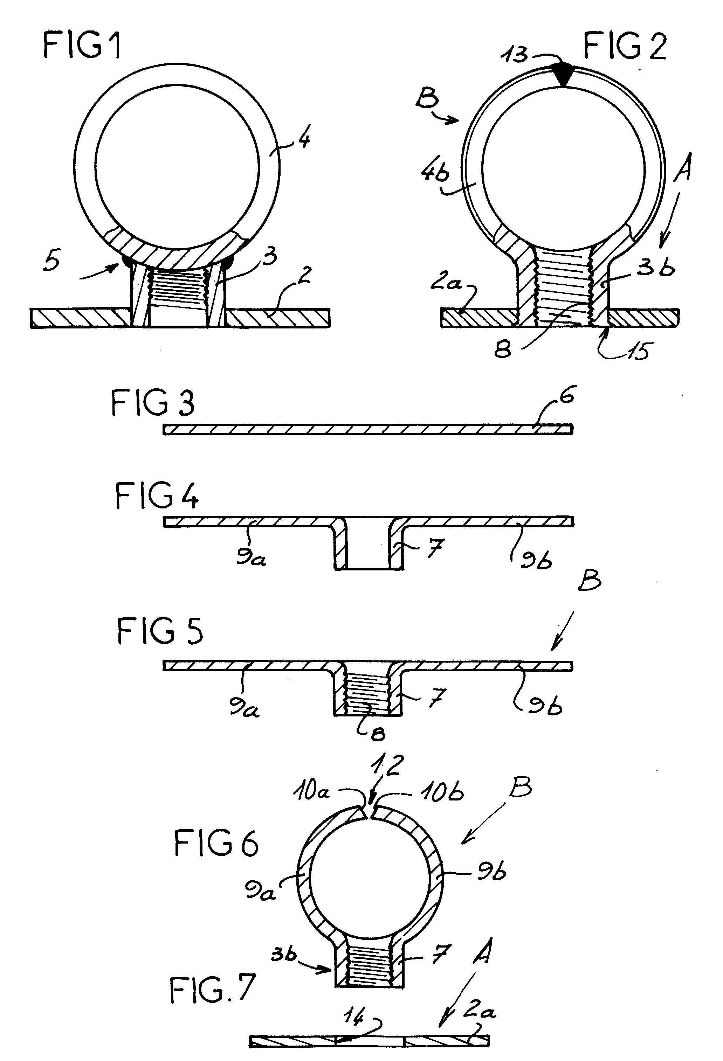

Comme le montre la figure 2, la tête d'amortisseur selon l'invention est composée de deux pièces, à savoir une pièce A correspondant à l'embase 2, et une pièce B correspondant au corps cylindrique 3b et à l'anneau 4b.

Comme montré à la figure 3, la pièce monolithique B est réalisée à partir d'un flan métallique 6, ayant des dimensions permettant de réaliser la tête. Plus précisément et en raison de la formation ultérieure du puits, la largeur et la longueur du flan sont supérieures, respectivement, à la largeur et à la longueur développée de l'anneau. Ce flan 6 est prédécoupé dans une tôle métallique sur une presse à suivre. Il est soumis, dans une phase ultérieure, à une opération d'emboutissage formant un puits 7 qui, dans une forme de mise en oeuvre préférée, est lui-même soumis, dans une phase suivante, à une opération réalisant un filetage interne 8.

Les figures 4 et 5 montrent que le puits 7 est réalisé au milieu du flan 6 qui comporte ainsi deux ailes latérales 9a, 9b.

Dans une phase ultérieure et toujours sur la même presse, ces deux ailes sont soumises à une opération de cintrage qui donne, à chacune d'elles, une forme semi cylindrique, comme montré à la figure 6. Les bords en vis à vis 10a, 10b de chacune des ailes sont rectilignes et forment naturellement des chanfreins, et cela en raison du cintrage qui a affecté les ailes. Ces bords délimitent une fente rectiligne 12 qui est sensiblement parallèle à une génératrice et dont la largeur est définie par le cintrage des ailes mais a une valeur volontairement limitée pour ne pas nécessiter plus d'un cordon de soudure. Cette fente est diamétralement opposée au corps tubulaire.

Dans une phase suivante non représentée, la fente 12 reçoit un cordon de soudure 13 assurant, comme montré à la figure 2, la liaison des extrémités des deux ailes 9a, 9b. La pose de ce cordon s'effectue à un autre poste, de manière automatique.

Le transfert de chaque pièce B entre la presse assurant sa conformation et le poste de soudage peut être réalisé par un manipulateur de manière que, sur la totalité de sa fabrication, cette pièce ne nécessite aucune intervention humaine. Son caractère monolithique lui procure une excellente résistance, sans qu'il soit nécessaire de procéder à des contrôles unitaires et permet de réduire les coûts de fabrication, mais aussi de gestion des stocks.

Lorsque cette tête est associée à une embase 2 et comme montré figure 7, la pièce A constituant l'embase est découpée à la presse dans une tôle métallique pour former un flan 2a qui est ensuite doté d'une découpe circulaire 14, apte à recevoir le corps axial cylindrique 3b de la pièce B.

Après que le corps 3b ait été emmanché avec serrage dans la découpe circulaire 14, son extrémité est soit sertie sur le bord de cette découpe, comme montré en 15 à la figure 2, soit soudée. Dans ce cas, la soudure s'effectue sur une surface plane, est facile à réaliser et procure des caractéristiques mécaniques constantes.

Il ressort de ce qui précède que la plupart des opérations de fabrication des deux pièces composant la tête d'amortisseur peuvent être entièrement automatisées et voire même enchaînées avec le recours à des manipulateurs, de manière à réduire les interventions aux seules opérations d'alimentation et de contrôle et réduire ainsi le coût général de la fabrication.

Le remplacement sur la tête de la soudure 5 s'effectuant sur une courbe gauche par une soudure rectiligne, non seulement simplifie la fabrication, mais permet aussi d'obtenir une excellente liaison qui s'ajoute au caractère monolithique, pour donner à la tête d'amortisseur une meilleure résistance mécanique que celle des têtes actuelles, du type représenté à la figure 1.

## Revendications

1. Tête de fixation pour amortisseur composé d'un corps axial tubulaire (3), d'un anneau (4) dont l'axe longitudinal est perpendiculaire au corps axial tubulaire, et éventuellement d'une embase (2) liée au corps (3), **caractérisée en ce que** le corps tubulaire axial (3b) est constitué par un puits cylindrique monolithique prolongé par deux ailes cintrées (9a, 9b) délimitant un anneau fendu (4b) et dont les bords de la fente, rectilignes et et parallèles à une génératrice de l'anneau (4b), sont reliés par une soudure droite (13), diamétralement opposée au corps tubulaire (36).

2. Procédé de fabrication de la tête de fixation selon la revendication 1, **caractérisé en ce qu**'il consiste :
a) - à découper un flan dans une tôle métallique,
b) - à réaliser, par emboutissage, et dans la partie centrale du flan, un puits cylindrique (7) correspondant au corps axial tubulaire (3b),
c) - à conformer à la presse les deux ailes (9a, 9b) du flan (6) jouxtant le puits (7), afin qu'elles soient semi cylindriques et délimitent un anneau fendu par une fente à bords parallèles à une génératrice, et diamétralement opposée au corps tubulaire,
et d) - à réaliser une soudure longitudinale liant les bords (10a, 10b) de la fente (12) délimitée entre les deux ailes semi cylindriques (9a, 9b) de l'anneau (4).

3. Procédé de fabrication de la tête de fixation selon la revendication 2, **caractérisé en ce qu**'il consiste, après la phase b) de formation du puits (7) et sur la même presse, à réaliser un filetage (8) dans le puits.

4. Procédé de fabrication de la tête de fixation selon la revendication 2, **caractérisé en ce qu**'il consiste, après la phase d), à emmancher le corps tubulaire dans une découpe circulaire (13) ménagée dans une embase circulaire métallique (2a), et à souder le bord (3b) du corps sur le bord de la découpe (13).
